(19)

**Europäisches Patentamt**
**European Patent Office**
**Office européen des brevets**

(11) **EP 4 455 089 A1**

(12) **EUROPEAN PATENT APPLICATION**

(43) Date of publication:
**30.10.2024 Bulletin 2024/44**

(21) Application number: **24170157.2**

(22) Date of filing: **15.04.2024**

(51) International Patent Classification (IPC):
*C01B 33/18* (2006.01)    *C01B 13/20* (2006.01)
*C01F 7/302* (2022.01)    *C01G 23/07* (2006.01)
*C03B 19/14* (2006.01)    *F23G 7/06* (2006.01)
*B22F 5/10* (2006.01)    *B22F 10/28* (2021.01)
*B33Y 80/00* (2015.01)    *F23D 14/22* (2006.01)
*F23D 99/00* (2010.01)    *F23L 7/00* (2006.01)

(52) Cooperative Patent Classification (CPC):
**C01B 33/18; B22F 5/106; B22F 10/28; B33Y 80/00;**
**C01B 13/20; C01F 7/302; C01G 23/07;**
**F23D 14/22; F23D 91/02; F23L 7/002; F23L 7/007;**
C01F 17/218; C01P 2006/11; C01P 2006/12;
F23C 2900/9901;                            (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.04.2023 EP 23169653**

(71) Applicant: **Evonik Operations GmbH**
**45128 Essen (DE)**

(72) Inventors:
• **Schmidt, Franz**
**64521 Groß-Gerau (DE)**
• **Gumprecht, Andreas**
**60437 Frankfurt am Main (DE)**
• **Podapaka, Maninadh**
**63477 Maintal (DE)**
• **Schaack, Senada**
**60438 Frankfurt am Main (DE)**

• **Müller, Michael**
**63637 Jossgrund / Burgjoß (DE)**
• **Schilling, Roland**
**63579 Freigericht (DE)**
• **Ihmig, Ronald**
**63543 Neuberg (DE)**
• **Yilmaz, Nuh**
**63454 Hanau (DE)**
• **Erz, Joachim**
**79739 Schwörstadt (DE)**
• **Katerinak, Witold**
**79664 Wehr (DE)**
• **Lygin, Alexander**
**64347 Griesheim (DE)**

(74) Representative: **Evonik Patent Association**
**c/o Evonik Industries AG**
**IP Management**
**Bau 1042A/PB 15**
**Paul-Baumann-Straße 1**
**45772 Marl (DE)**

(54) **PROCESS FOR PRODUCING AT LEAST ONE PYROGENIC COMPOUND AND BURNER SUITABLE FOR USE IN SAID PROCESS**

(57)     The present invention relates to a process for producing at least one pyrogenic compound, a burner suitable for use in said process and a process for making the burner and a production facility comprising at least one burner.

**Figure 5**

EP 4 455 089 A1

Processed by Luminess, 75001 PARIS (FR)

**(Cont. next page)**

(52) Cooperative Patent Classification (CPC): (Cont.)
F23D 2900/21005

**Description**

The present invention relates to a process for producing at least one pyrogenic compound, a burner suitable for use in said process and a process for making the burner and a production facility comprising at least one burner.

**BACKGROUND OF THE INVENTION**

The so-called pyrogenic processes, i.e. flame hydrolysis and flame pyrolysis are well-established routes for producing finely dispersed metal oxide and metalloid oxide powders, such as silicon dioxide (also referred to as silica), aluminum oxide (alumina), titanium dioxide (titania), and others suitable for various applications. In such processes, hydrogen or other fuel gases and oxygen are usually used to generate a flame for conversion of volatile metal precursors and metalloid precursors to the corresponding oxides.

In a typical burner, a fuel gas such as hydrogen is homogeneously mixed with air and a metal or metalloid precursor and is used for generating the corresponding metal oxide products in a flame. One general problem associated with using such typical burners is a low flexibility in using components reacting with each other, e.g. a combination of water vapor and silicon tetrachloride, as well as low flexibility in using potential explosive mixtures, i.e. limited concentrations of hydrogen and oxygen can be used for safety reasons.

GB 2049641 discloses a manufacturing process of silica by flame hydrolysis. The process uses a mixture of water vapor and the silicon dioxide precursor that is formed inside the burner and then combined with oxygen in a combustion chamber of a device prior to reaching the flame. A stable long-term operation is not possible in this manner, since deposits of already reacted raw material block the burner.

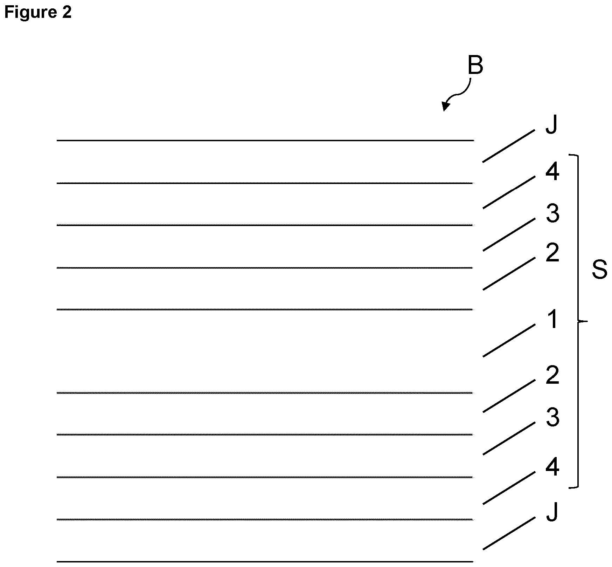

US 2004/253164 discloses a process for preparing silicon dioxide and a device for this purpose. The burner presented in this application comprises three tubes disposed around each other. The central tube is used for feeding steam while the jacket tube completely enclosing the central tube is used to feed the silicon dioxide precursor, a combustion gas and an oxygen-containing gas. From figure 2 of this disclosure, it can be seen that the central tube feeding the steam lies completely inside of the jacket tube and thus steam will be inserted into the jacket tube and the reaction will take place also inside the jacket tube. Water vapor can enter the combustion chamber from an opening opposite the burner. From the presented results, it is obvious that mixing efficiency in the flame is quite low. Further, very specific ratios of the employed compounds are required to carry out the process further limiting the usefulness of the proposed method.

US 2009/0253851 describes producing silica in a combustion process using a burner with a concentric multi-pipe structure. A siloxane compound such as octamethylcyclotetrasiloxane is fed into the central pipe with oxygen, a fuel gas is fed into the surrounding annular pipe, and oxygen-containing gas is fed into the third pipe. The thus produced silica particles are reported to not contain coarse particles and have narrow particle size distributions. However, this burner geometry also delivers quite limited mixing efficiency of the silicon precursor as can be seen from the very specific ratios of gases that need to be applied in order to form the product.

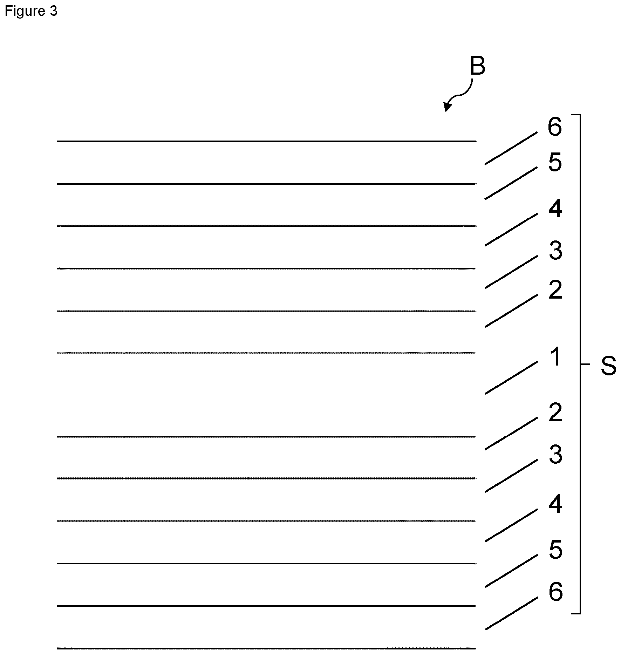

US 2005/129603 discloses burners with a special combination of concentric pipes for producing fumed silicas. The central pipe for feeding silicon tetrachloride is enclosed by a pipe for feeding oxygen which in turn is enclosed by a further pipe for feeding hydrogen. Alternatively, in figure 3 silicon tetrachloride and oxygen are fed through the central pipe while hydrogen is fed through the pipe surrounding said central pipe. However, these pipes for feeding the metalloid precursor are not concentric to each other and mixing of the silicon precursor is not optimal. In particular, the process described therein lacks mixing efficiency as the hydrogen and the precursor are fed separately.

US 2004/216494A discloses a burner comprising three concentric tubes, wherein the central tube is used for feeding a liquid metal precursor, and the other concentric outer tubes are used for feeding a combustion-supporting gas and/or a non-combustible gas. Again, metal or metalloid precursors are fed through one pipe only leading to limited mixing efficiency. In addition to that, the use of a liquid metal precursor further limits the mixing efficiency because the liquids are present as minute droplets.

Although many attempts have been described in the prior art, still to-date, a sufficient mixing of the compounds in the flame to efficiently avoid the formation of undesired deposits inside the burner has not yet been achieved. Further, the product quality of the formed metal oxides or metalloid oxides is still far from ideal because of the insufficient mixing efficiency.

**OBJECTIVE OF THE INVENTION**

It is therefore the objective of the present invention to overcome the shortcomings of the prior art.

Thus, it is an objective of the present invention to provide a process which allows for an efficient mixing of the starting materials in the flame. The starting materials include the at least one metal or metalloid precursor compound, oxygen and optionally water, fuel gas and/or inert gases such as nitrogen.

## SUMMARY OF THE INVENTION

The aforementioned objectives are solved by the process according to the invention for producing at least one pyrogenic compound selected from the group consisting of metal oxide, metalloid oxide and mixtures thereof by burning at least one precursor compound selected from the group consisting of metal oxide precursor and metalloid oxide precursor, the process employing at least one burner (B)
characterized in that

the at least one burner (B) comprises a tube system (S), said tube system comprising at least 4 concentric tubes (1, 2, 3, 4) wherein
the second tube (2) is arranged around the central tube (1), the third tube (3) is arranged around
the second tube (2), and the fourth tube (4) is arranged around the third tube (3), and wherein
the at least one precursor compound is fed through at least two tubes that are separated from each other by at least one other tube and
wherein an oxygen containing gas stream is fed through at least one tube not being used to feed the at least one precursor compound.

It is a further advantage of the present invention that the process according to the invention results in a high productivity of the plant. The productivity of the plant (P) can be measured as the ratio of the mass of the formed pyrogenic compound to the volume of the used starting materials at standard conditions (pressure of 1 atm and temperature of 25 °C (298 K):

$$P = \frac{mass\ of\ pyrogenic\ compound\ [g]}{volume\ of\ starting\ materials\ [m^3]}$$

The productivity should not be lower than 150 g/m$^3$. However, it is preferred for economic reasons that the productivity is at least 175 g/m$^3$, ideally 200 g/m$^3$ or more. Productivities below said thresholds lack economics and such processes are ecologically not benign as as more energy is required for producing 1 kg of the pyrogenic compound.

It is yet another advantage of the present invention that the process according to the invention allows for a wide range of surface areas (BET) of the formed pyrogenic compounds. The BET specific surface area can be for example at least 150 g/m$^2$, and it is preferred that the BET specific surface area is equal to or even exceeds 300 g/m$^2$.

The process according to the invention advantageously can be carried out for a prolonged period of time as no or at least significantly less deposits are formed inside the burner.

## BRIEF DESCRIPTION OF FIGURES

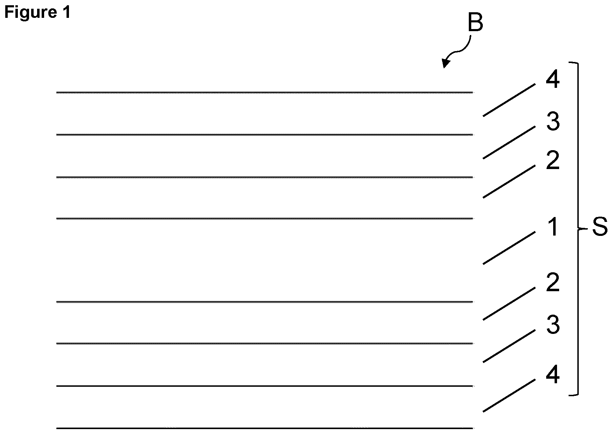

Figure 1 shows a partial cross-section of the burner (B) according to the invention (as side-view). The burner (B) comprises a tube system (S). The tube system shown comprises 4 concentric tubes (1, 2, 3, 4) wherein the second tube (2) is arranged around the central tube (1) and is shown above and below the central tube. The third tube (3) is arranged around the second tube (2) and is shown above and below the second tube (2). The fourth tube (4) is arranged around the third tube (3) is shown above and below the third tube (3).

Figure 2 depicts a preferred embodiment of the invention showing the burner of figure 1 with a jacket (J) arranged concentrically around the tube system.

Figure 3 represents another preferred burner of the present invention and depicts a partial cross-section thereof (as side-view). Said burner (B) comprises a tube system (S) comprising 6 concentric tubes (1, 2, 3, 4, 5, 6) wherein the second tube (2) is arranged around the central tube (1) and is shown above and below the central tube. The third tube (3) is arranged around the second tube (2) and is shown above and below the second tube (2). The fourth tube (4) is arranged around the third tube (3) is shown above and below the third tube (3). The fifth tube (5) is arranged around the fourth tube (3) is shown above and below the fourth tube (4). The sixth tube (6) is arranged around the fifth tube (5) is shown above and below the fifth tube (5).

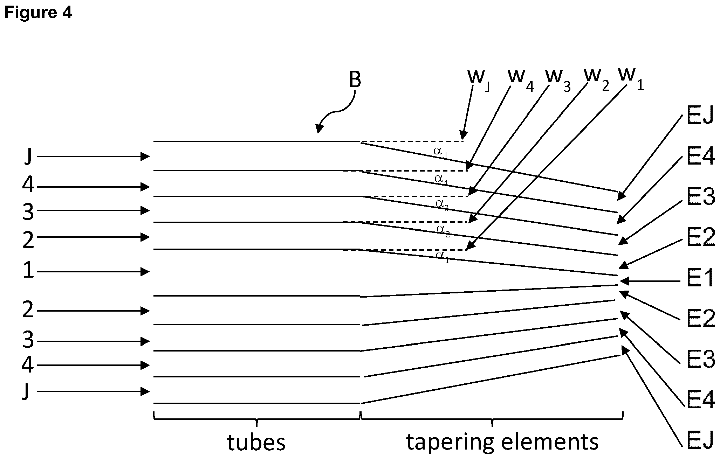

Figure 4 shows a cross-section of a preferred burner (B) according to the invention, said burner comprising a tube system (S) with 4 concentric tubes (1, 2, 3, 4) and a jacket (J), each with a tapering element of the tube (E1, E2, E3, E4, EJ, as side-view). Tapering element E1 is connected to tube 1, tapering element E2 is connected to tube 2, tapering element E3 is connected to tube 3, tapering element E4 is connected to tube 4, and tapering element EJ is connected to the jacket (J). The tips of the tapering elements are shown on the right-hand side of the figure. Furthermore, in figure 4 the angles $\alpha_1, \alpha_2, \alpha_3, \alpha_4, \alpha_J$ are depicted showing the degree of the tapering. The angles $\alpha_1, \alpha_2, \alpha_3, \alpha_4, \alpha_J$ are the angles between the virtual extension of the tube walls ($w_1, w_2, w_3, w_4, w_J$, depicted as dashed lines) of the tubes (1, 2, 3, 4) and the jacket (J) and the actual tube wall formed by the tapering element of the tube (E1, E2, E3, E4, EJ).

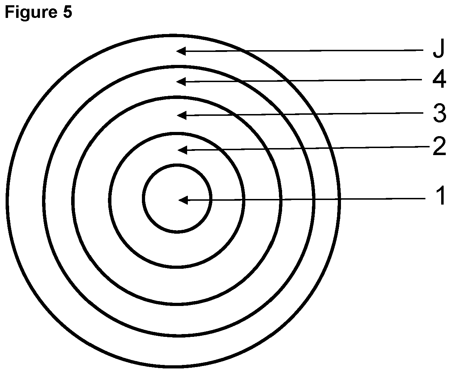

Figure 5 shows a front view of the tube system of the burner according to the invention. The openings of the tubes (1, 2, 3, 4) of the tube system and a jacket (J) arranged concentrically around the tube system are depicted.

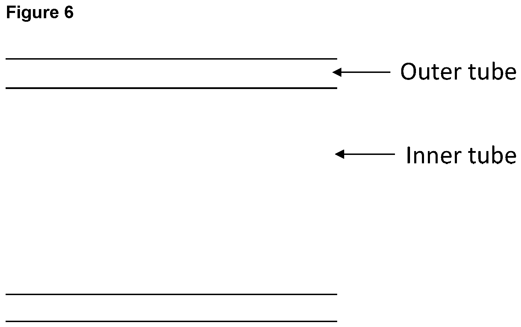

Figure 6 shows a conventional burner of the prior art. Said conventional burner was used in the comparative examples described hereinafter. It consists of an inner tube and an outer tube.

In the figures the compounds stream from the left-hand side to the right-hand side of the figure. The aforementioned figures are not drawn to scale.

## DETAILED DESCRIPTION OF THE INVENTION

### Precursor compound and pyrogenic compound obtained by the process according to the invention

The process according to the invention allows for the formation of the at least one pyrogenic compound selected from the group consisting of metal oxide and metalloid oxide. The at least one pyrogenic metal oxide can be any metal oxide producible by burning from a suitable source, i.e. the precursor compound. The at least one pyrogenic metal oxide is preferably selected from the group consisting of aluminum oxide ($Al_2O_3$), titanium oxide ($TiO_2$), zirconium dioxide ($ZrO_2$), niobium oxide ($Nb_2O_5$), tungsten oxide (WOs), iron oxide (e.g. FeO, $Fe_2O_3$), cerium oxide ($CeO_2$) and mixtures of the aforementioned.

The corresponding metal oxides are preferably present in the highest possible oxidation states of the metal in the oxide, e.g. Ce (IV) in $CeO_2$ for cerium oxide. The at least one pyrogenic metal oxide is more preferably selected from the group consisting of aluminum oxide and titanium oxide.

The at least one pyrogenic metalloid oxide in the context of the present invention can be any metalloid oxide, preferably selected from the group consisting of boron oxide ($B_2O_3$), silicon dioxide ($SiO_2$, also referred to as silica in the art), germanium oxide ($Ge_2O_3$) and mixtures of the aforementioned. The corresponding metalloid oxides are preferably present in the highest possible oxidation state of the metalloid in the oxide, e.g. Si (IV) in $SiO_2$ for silicon oxide. The at least one pyrogenic metalloid oxide is more preferably silicon dioxide.

The process according to the invention is particularly preferably used to produce one or more of silicon dioxide, titanium oxide and aluminum oxide. Most preferably, the process according to the invention is used to produce silicon dioxide.

The obtained pyrogenic compounds can inter alia be used as constituents of paints or coatings, silicones, pharmaceutical or cosmetic preparations, adhesives or sealants, toner compositions, as well as for modifying rheology properties of liquid systems, as anti-settling agent, for improving flowability of powders, and for improving mechanical or optical properties of silicone compositions

The term "pyrogenic" means in the context of the present invention that the at least one pyrogenic compound is made in a flame.

The at least one metal oxide precursor can be any metal compound suitable to produce the at least one metal oxide in the process according to the invention. The at least one metal oxide precursor is preferably a salt or an organic compound capable of forming said metal oxide. Suitable salts are generally the metal halides such as the metal chlorides. Suitable organic compounds are the metal alkoxides including the methoxides (-O-$CH_3$), ethoxides (-O-$CH_2$-$CH_3$) and propoxides (-O-$CH_2$-$CH_2$-$CH_3$ or -O-CH(CHs)z). The person skilled in the art is aware that the metal atoms in the aforementioned compounds may be in different oxidation states. This is of no relevance for the present invention and metal compounds of varying oxidation state may be used without restraints. For example, in case of titanium oxide is the desired metal oxide to be made using the process according to the invention suitable precursor compounds are preferably selected from the group consisting of titanium-(IV)-chloride (TiCl4), titanium-(IV)-iso-propoxide (Ti(O-CH($CH_3$)$_2$)$_4$) and titanium-(IV)-n-propoxide (Ti(O-$CH_2$-$CH_2$-$CH_3$)$_4$). In case of aluminum oxide as target metal oxide, suitable precursor compounds are preferably selected from the group consisting of aluminum chloride ($AlCl_3$), aluminum-iso-propoxide (Al(O-CH($CH_3$)$_2$)$_3$) and aluminum-n-propoxide (Al(O-$CH_2$-$CH_2$-$CH_3$)$_3$).

The at least one metalloid oxide precursor can be any metalloid compound suitable to produce the at least one metalloid oxide in the process according to the invention. The at least one metalloid oxide precursor is preferably selected from the group consisting of metalloid halides such as a metalloid chlorides (e.g. silicon tetrachloride ($SiCl_4$), organo-functional metalloid halides (e.g. methyltrichlorosilane ($MeSiCl_3$) or n-propyltrichlorosilane ($C_3H_7$-$SiCl_3$)), H-functional metalloid halides (e.g. trichlorosilane (H-$SiCl_3$)), organo-functional cyclic siloxanes (preferably those with 3 to 8 silicon atoms forming the cycle, in particular octamethylcyclotetrasiloxane ($D_4$)) and metalloid alkoxides including the respective methoxides (-O-$CH_3$), ethoxides (-O-$CH_2$-$CH_3$) and propoxides (-O-$CH_2$-$CH_2$-$CH_3$ or -O-CH(CHs)z). In case of silicon dioxide as the metalloid oxide to be produced in the process according to the invention, the precursor compound is preferably selected from the group consisting of silicon tetrachloride, silicon tetramethoxide (TMOS, $Si(OMe)_4$) and silicon tetraethoxide (TEOS, $Si(OEt)_4$).

It is preferred for a facilitated process control that the at least one precursor compound is liquid or gaseous, more preferably gaseous, under process conditions (*vide infra*). The person skilled in the art can select appropriate precursor compounds to meet this preference from above lists.

The process according to the invention is preferably used to produce aluminum oxide, titanium oxide or silicon dioxide and the metal precursor or metalloid precursor is more preferably selected from the group consisting of aluminum chloride, aluminum-*iso*-propoxide, aluminum-*n*-propoxide, titanium-(IV)-chloride, titanium-(IV)-*iso*-propoxide, titanium-(IV)-*n*-propoxide, silicon tetrachloride, silicon tetramethoxide and silicon tetraethoxide. The process according to the invention is most preferably used to produce silicon dioxide and the at least one metalloid precursor is selected from the group consisting of silicon tetrachloride, methyltrichlorosilane, octamethylcyclotetrasiloxane, silicon tetramethoxide and silicon tetraethoxide.

It is clear to the person skilled in the art that a pyrogenic compound to be produced in the process according to the invention requires a corresponding precursor compound. For example, if aluminum oxide is to be produced in the process according to the invention, an aluminum oxide precursor needs to be employed.

Burning in the context of the present invention means *inter alia* the oxidative conversion of a compound (here the at least one pyrogenic compound precursor) in an oxygen-containing atmosphere by the means of a flame. In the process according to the invention, the at least one precursor compound is burned by a flame, the flame being preferably located outside the burner and being in contact with the burner. The contact is established by the feeds of the compounds through the tube system described hereinafter.

**The tube system (S)**

The at least one burner (B) to be used in the process according to the invention comprises the tube system (S). Said tube system comprises at least 4 concentric tubes (1, 2, 3, 4). The terms "tube" and "pipe" can be used interchangeably in the context of the present invention.

The tube system (S) comprises the central tube (1). Said central tube (1) is preferably arranged concentrically around the central axis (A) of the tube system, typically over the entire tube system (S).

The second tube (2) is arranged around the central tube (1). The central tube thus is enclosed by the second tube (2). The second tube (2) is preferably disposed around the central tube (1) over the whole length of the latter (inside the tube system (S)). Generally, it is preferred that any (more exterior) tube being arranged around another tube is disposed around the (more interior) tube over the whole length of the enclosed tube inside the tube system. The second tube (2) is preferably arranged concentrically around the central axis (A) of the tube system, typically over the entire tube system (S).

The third tube (3) is arranged around the second tube (2). The second tube (2) is therefore enclosed by the third tube (3). The third tube (3) is preferably disposed around the second tube (2) over the whole length of the latter (inside the tube system (S)). The third tube (3) is preferably arranged concentrically around the central axis (A) of the tube system, typically over the entire tube system (S).

The fourth tube (4) is arranged around the third tube (3). The second tube (2) is therefore enclosed by the third tube (3). The fourth tube (4) is preferably disposed around the third tube (3) over the whole length of the latter (inside the tube system (S)). The fourth tube (4) is preferably arranged concentrically around the central axis (A) of the tube system, typically over the entire tube system (S).

As shown in Figure 3, the tube system (S) preferably comprises a fifth tube (5) arranged around the fourth tube (4) and a sixth tube (6) arranged around the fifth tube (5). The fifth tube (5) is preferably disposed around the fourth tube (4) over the whole length of the latter (inside the tube system (S)).

The sixth tube (6) is preferably disposed around the fifth tube (5) over the whole length of the latter (inside the tube system (S)). The fifth and the sixth tube (5, 6) are preferably arranged concentrically around the central axis (A) of the tube system, typically over the entire tube system (S). This further enhances the mixing efficiency of the process according to the invention.

The shape of the tubes of the tube system (S) is not restricted as long as they are concentric. The shape may be round-shaped (preferably circular), rectangular or may have any other form to be used in the process according to the invention. Preferably, the cross-sections of the at least 4 tubes (or all tubes of the tube system (S) if more than 4 are comprises) are round-shaped, preferably circular (see Figure 4). Alternatively, the cross-section is one or more of rectangular (especially square), star-shaped or petal-shaped. More preferably, the tubes of the tube system (S) are round-shaped, they are even more preferably circular. It is preferred that all tubes of the tube system (S) have (essentially) the same shape. For example, all tubes can be round-shaped or they are preferably all circular.

The tubes of the tube system end in an opening each (in Figures 1 to 3 shown on the right-hand side of the tube system, not labelled). Outside the openings of the tubes, the burning of the at least one metal oxide precursor and/or metalloid precursor is to take place during the process according to the invention. To that end, a flame is in contact with the burner for as long as the process according to the invention is carried out.

Preferably, the surface area of the opening of any tube being closer to the central axis of the tube system (S) is smaller or the same, preferably smaller, as the surface area of the opening of any tube being located further away from said axis. Preferably, the surface area of the opening of the central tube (1) is the same or smaller, preferably smaller, than the surface area of the opening of the second tube (2). Preferably, the surface area of the opening of the second tube (2) is the same or smaller, preferably smaller, than the surface area of the opening of the third tube (3). Preferably, the surface area of the opening of the third tube (3) is the same or smaller, preferably smaller, than of the opening the fourth tube (4). If present, the surface area of the openings of the fifth tube (t) is the same or greater, preferably greater, compared to the fourth tube (4) and the surface area of the opening of the sixth tube (6) is the same or greater, preferably greater, compared to the surface area of the fifth tube (5). Particularly preferably, the surface area of the central tube (1) is the same or smaller, preferably smaller, than the surface area of the second tube (2) which in turn is the same or smaller, preferably smaller, than the surface area of the third tube (3) which again is the same or smaller, preferably smaller, than the fourth tube (4).

Preferably, the surface area of the opening of each tube of the tube system constitutes from 0.1 to 50%, more preferably 1% to 30% of the total surface area of all tubes. The surface area of the openings of each tube preferably ranges from 0.1 to 1000 $mm^2$, more preferably from 0.25 to 250 $mm^2$, even more preferably from 0.5 to 100 $mm^2$.

It is preferred that the surface area of the opening of each tube being closer to the central axis of the tube system is less than or equal to the surface area of the opening of each tube being further away from said axis. More preferably, the surface area of the opening of the second tube (2) is 1 to 25 times the surface area of the opening of the central tube (1), the surface area of the opening of the third tube (3) is 1 to 5 times the surface area of the opening of the second tube (2) and the surface area of the opening of the fourth tube (4) is 1 to 4 times the surface area of the opening of the third tube (3). If present, the surface area of the opening of the fifth tube (5) is 1 to 2 times the surface area of the opening of the fourth tube (1) and the surface area of the opening of the sixth tube (6) is 1 to 1.5 times the surface area of the opening of the fifth tube (5).

Outside the tube system (S), the tubes preferably each are connected to a tapering element (E1, E2, E3, E4). Each tapering element comprises an interior connection that is located at the opening of the respective tubes and a tip on the opposite side. The tapering elements are positively fitting on the openings of the tubes. Thus, the interior connection of the tapering element has the same surface area as the opening of the tube that it is connected thereto. The tapering element narrows towards its tip (see Figure 4). Thus, the surface area of the opening of the tubes is greater than the surface area of the opening of the respective tapering elements. The ratios of the surface areas of the opening of the tubes described hereinbefore apply *mutatis mutandis* to the ratios of the surface areas of the tapering elements. The angles $\alpha_1$, $\alpha_2$, $\alpha_3$, $\alpha_4$ forming the angles between the virtual extension of the tube walls ($w_1$, $w_2$, $w_3$, $w_4$, exemplarily depicted as dashed lines in Figure 4) of the tubes (1, 2, 3, 4) and the actual tube wall formed by the tapering element of the tube (E1, E2, E3, E4) preferably ranges from 2 to 45°, preferably from 5 to 30°, more preferably from 10 to 25°. The tapering elements form an outlet of the burner close to the flame used for burning the at least one precursor compound. The tapering elements advantageously improve the mixing efficiency.

It is preferred that the at least 4 tubes of the tube system or the tapering elements connected thereto end in a plane. Said plane is preferably arranged in an angle of 90° ± 10° in relation to the central axis (A) of the tube system (S). More preferably, said plane is arranged orthogonal to the central axis (A).

The material of the tubes is not particularly restricted. It is, however, important to bear in mind when selecting appropriate materials that a flame is in close vicinity of the burner when the process according to the invention is carried out. Thus, non-ignitable materials with relatively high melting points are preferred for safety reasons. Preferable materials are selected from the group consisting of iron, iron-based alloys such as steel, aluminum and aluminum based alloys. Iron based alloys comprise at least 50 wt.-%, typically 90 wt.-% iron, based on the total weight of the alloy. Typically used iron alloys are marketed under the brand names Inconel and Hastelloy. The same applies *mutatis mutandis* to aluminum-based alloys. Iron and iron-based alloys are more preferred as materials in this regard.

**Gas feeds**

In the process according to the invention, the at least one precursor compound and the oxygen containing gas stream are fed through various tubes of the tube system. To that end, sources of the aforementioned compounds and those described hereinafter are provided and are connected to the respective tubes of the tube system. Therefore, the burner is configured to feed the corresponding compounds. The connection can be established by conventional means known to the person skilled in the art such as tubes, pipes, hoses and the like including - if needed - valves and taps or faucets.

The **oxygen containing gas stream** is fed through at least one tube not being used to feed the at least one precursor compound. This prevents the mixing of the at least one precursor compound and oxygen and a potential reaction thereof inside of the tubes. The formation of the pyrogenic compound in the tubes may result in their clogging. Further, the control of the reaction becomes difficult resulting - aside from dangers such as explosions of the burner - in impaired product qualities.

In one embodiment of the present invention, the oxygen containing gas stream comprises oxygen in an amount of 21 vol% or more, preferably in an amount of 25 to 50 vol%, more preferably in an amount of 30 to 40 vol%, based on the total volume of the gas stream. As a preferred alternative air is used as the oxygen containing gas stream to save cost and simplify the process according to the invention.

Standard burners of the prior art cannot use oxygen contents of more than 35 vol% due to safety reasons. The process according to the invention and the burner according to the invention to the contrary can employ oxygen containing gas streams with 50 vol% of oxygen or higher and up to 100 vol% oxygen.

The at least one **precursor compound** is fed through at least two tubes that are separated from each other by at least one other tube. The at least one other tube is preferably present between the at least one tubes used to feed the at least one precursor compound. The tubes used to feed the at least one precursor compound are thus non-adjacent. It is even more preferred that all tubes being used to feed the at least one precursor compound are being separated by at least one other tube. Thus, it is preferred that there are no adjacent tubes being used to feed the at least one precursor compound. Preferably, the at least one tube used to feed the oxygen containing gas stream is located between two tubes being used to feed the at least one precursor compound. More preferably, all other tubes being used to separate the tubes being used to feed the at least one precursor compound are used to feed the oxygen containing gas stream. This gives rise to an efficient mixing and thus optimal product qualities.

Preferably, **water** is fed through at least one tube of the tube system. It is preferred that water is not fed through any tube being used to feed the at least one precursor compound to avoid undesired reaction in the inside of the burner. It is preferred to further facilitate the process according to the invention, that the oxygen containing gas stream is fed in one tube together with water. Preferably, the oxygen containing gas stream gas stream is air in this case. It is thus preferred to feed water and air through one tube together. If water is fed through a tube, it is preferably fed as water vapor (and thus in its gaseous form). The molar ratio of water to the at least one precursor compound preferably is at least 0.1, more preferably at least 0.3 and it even more preferably ranges from 0.3 to 5.0 and it still even more preferably ranges from 1.0 to 2.0. The use of water advantageously allows for high productivity of the plant while still giving rise to pyrogenic compounds with very high surface areas (high BET specific surface area).

It is preferred that the oxygen containing gas stream and optionally water is fed together with at least one inert gas. The at least one inert gas is preferably selected from the group consisting of nitrogen, noble gas (such as helium, neon, argon, krypton or xenon) and mixtures of the aforementioned. The at least one inert gas is more preferably nitrogen. The use of the at least one inert gas advantageously improves the safety of the process.

It is preferred that one tube separating the two tubes being used to feed the at least one precursor compound is used to feed the gas stream comprising oxygen or a mixture comprising oxygen. It is particularly preferred that the tubes being used to feed the at least one precursor compound are separated from each other by one other tube each and all tubes separating the aforementioned tubes are used to feed the gas stream comprising oxygen or a mixture comprising oxygen.

A **fuel gas** is preferably fed through at least one tube, wherein said tube is not used to feed oxygen. The fuel gas is preferably selected from the group consisting of hydrogen, methane, ethane, propane, acetylene and mixtures of the aforementioned. The fuel gas is more preferably hydrogen.

It is preferred that the fuel gas is fed together with at least one inert gas. The at least one inert gas is preferably selected from the group consisting of nitrogen, noble gas (such as helium, neon, argon, krypton or xenon) and mixtures of the aforementioned. The at least one inert gas is more preferably nitrogen. The use of the at least one inert gas advantageously improves the safety of the process.

The inert gas to be fed with the fuel gas is selected independently from the inert gas fed with the oxygen containing gas stream if both are present.

It is preferred that the at least one precursor compound is fed with the fuel gas. More preferably, all tubes being used to feed the at least one precursor compound are also being used to feed the fuel gas.

It is particularly preferred that the at least one precursor compound is fed through the central tube (1) and the third tube (3). If the tube system comprises a fifth (5) and a sixth tube (6), it is preferred that the at least one precursor compound is fed through the fifth tube (5). Then, at least one precursor compound is fed through the central tube (1), the third tube (3) and the fifth tube (5).

The burner (B) preferably comprises at least one jacket (J) arranged around the tube system (S). The jacket is preferably arranged concentrically around the tube system. The jacket allows for an enhanced stability of the flame. The cross-section area at the burner opening of the jacket (J) is the same or larger than the cross-section area at the burner opening of the exterior tube, i.e. the fourth tube or the sixth tube (4, 6).

It is preferred that no metal oxide precursor or metalloid oxide precursor is fed through the outermost tube of the burner or the jacket (J). This may lead to incomplete combustion. The jacket (J) has an opening. The surface area of the opening is preferably the same or greater, preferably greater, than the surface area of the tube the jacket encloses directly. If the burner (B) comprises the jacket (J), it is preferably used to feed the fuel gas, more preferably hydrogen.

The average exiting velocity (AEV) of the starting materials (i.e. the at least one precursor compound, the oxygen-containing gas stream, water, the fuel gas) or mixtures thereof (optionally containing further compounds such as the inert gas) from any tube (1) preferably differs by at most 50%, more preferably by at most 40%, even more preferably by at most 30%, from each other. A more homogenous velocity of the starting materials advantageously results in a more efficient mixing in the flame and thus, in enhanced product quality. Therefore, it is more preferred that all average velocities of the used starting materials are (substantially) the same. The average exiting velocity of any starting material can be obtained by the following equation:

$$AEV = \frac{\text{feed rate of the starting material } [m^3]}{\text{surface area of the opening of the tube } [m^2] * \text{time } [s]}$$

If the tube comprises a tapering element, the surface area of the tapering element has to be used in above equation instead of the surface area of the opening of the tube. The AEV can be measured in $m*s^{-1}$. If more than one compound is fed through one tube, it is preferred that the feed rates of these compounds are identical. It is also preferred that the average exiting velocity of starting materials from any tube differs by at most 50%, preferably by at most 40% from an average exiting velocity of compounds from any other tube.

The aforementioned starting materials are typically fluids, preferably gases, for the same reasons laid out for the at least one precursor compound. Fluids in the context of the present invention are gases or liquids. Gases are preferred as they allow for a more homogeneous flow through the burner further enhancing the mixing efficiency in the flame. Optionally, the burner comprises means to elevate the temperature of a compound, in particular if liquid compounds are employed such as water. The temperature inside the burner according to the invention is preferably adjusted to temperatures sufficiently high so that all starting materials are gaseous. Suitable means in this context can be ovens, resistance furnaces or heating plates. Alternatively or in addition thereto, the liquids can fed via a spray application device.

The starting materials leave the burner from the opening or - if present - from the outlet of the tapering element. After leaving the burner they are fed to the flame and react in the flame to give the pyrolytic compound. The process according to the invention achieves very efficient mixing in the flame and thus, a high portion of the employed starting materials can be converted into the desired pyrolytic compound. This can be measured as the productivity of the plant (P) described above.

It is preferred that the burner is comprised in a burner chamber. This allows to introduce a secondary air flow from outside the burner. This secondary air prevents undesired deposit formation in the burner chamber.

In a preferred embodiment of the present invention, the at least one precursor compound and preferably, the fuel gas are fed through the central tube (1);

the oxygen containing gas stream and preferably, water are fed through the second tube (2);
the precursor compound and preferably, the fuel gas are fed through the third tube (3); and
the oxygen containing gas stream and preferably, water are fed through the fourth tube (4).

In a more preferred embodiment of the present invention, the process according to the invention for producing at least one pyrogenic compound by burning at least one precursor compound employs at least one burner (B) characterized in that

the at least one burner (B) comprises a tube system (S), said tube system comprises at least 4 concentric tubes (1, 2, 3, 4) and at least one jacket (J) arranged concentrically around the tube system (S)
wherein
the second tube (2) is arranged around the central tube (1), the third tube (3) is arranged around
the second tube (2), and the fourth tube (4) is arranged around the third tube (3), and wherein
the at least one precursor compound is fed through at least two tubes that are separated from each other by at least one other tube and
wherein an oxygen containing gas stream and water is fed through at least one tube not being used to feed the at least one precursor compound and no precursor compound is fed through the outermost tube of the burner or the jacket (J).

In an even more preferred embodiment of the present invention, the process according to the invention for producing at least one pyrogenic compound by burning at least one precursor compound employs at least one burner (B) characterized in that

the at least one burner (B) comprises a tube system (S), said tube system comprises at least 6 concentric tubes (1, 2, 3, 4, 5, 6) and at least one jacket (J) arranged concentrically around the tube system (S)
wherein
the second tube (2) is arranged around the central tube (1), the third tube (3) is arranged around
the second tube (2), the fourth tube (4) is arranged around the third tube (3), the fifth tube (5) is arranged around the fourth tube (4), the sixth tube (6) is arranged around the fifth tube (5), and
wherein
the at least one precursor compound is fed through at least two tubes that are separated from each other by at least one other tube and
wherein an oxygen containing gas stream and water is fed through at least one tube not being used to feed the at least one precursor compound and no precursor compound is fed through the outermost tube of the burner or the jacket (J).

In one embodiment of the present invention, the process according to the invention for producing at least one pyrogenic compound selected from the group consisting of metal oxide, metalloid oxide and mixtures of the aforementioned by burning at least one precursor compound selected from the group consisting of metal oxide precursor and metalloid oxide precursor, the process employing at least one burner (B)
characterized in that

the at least one burner (B) comprises a tube system (S), said tube system comprising at least 4 concentric tubes (1, 2, 3, 4) wherein
the second tube (2) is arranged around the central tube (1), the third tube (3) is arranged around
the second tube (2), and the fourth tube (4) is arranged around the third tube (3), and wherein
the at least one precursor compound is fed through at least two tubes that are separated from each other by at least one other tube and
wherein an oxygen containing gas stream is fed through at least one tube not being used to feed the at least one precursor compound
and the at least one other tube is present between the at least one tubes used to feed the at least one precursor compound.

**Stoichiometry of the compounds**

The $\lambda$-value is a measure of the oxygen fed to the burner and the stochiometric amount required for completely oxidating the at least one precursor compound as described in US 6,063,354, col. 2., lines 35 to col. 3, lines 48. The following equation can be employed for its calculation:

$$\lambda = \text{oxygen fed to the burner [mol] / stoichiometrically required amount of oxygen [mol]}$$

The $\lambda$-value more preferably ranges from 1.0 to 2.0, even more preferably from 1.0 to 1.8.
The $\gamma$ value is defined as the amount of substance of the fuel gas (preferably hydrogen) fed into the tube(s) divided by the amount of substance required for complete pyrolysis of the at least one precursor compound. The equation is the following:

$$\gamma = \text{hydrogen fed to the burner [mol] / stoichiometrically required amount of hydrogen [mol]}$$

Details can be found in above citation given for the $\lambda$-value. The $\gamma$-value preferably ranges from 1.0 to 2.0, more preferably from 1.2 to 1.8.
The o-value is a measure of the amount of substance of water used and the amount of substance of the at least one precursor compound. The following equation is used for its calculation:

$$o = H_2O \text{ supplied [mol] / precursor compound [mol]}$$

Depending on the parameters and the starting materials used in the process according to the invention, the pyrogenic compound is preferably subjected to a post-treatment after the process according to the invention is concluded. A preferable post-treatment is a deacidification step aiming at removing acid traces attached to the obtained pyrogenic compound. The acid traces typically originate from a side-reaction from the precursor compound, in particular if halides are employed. The deacidification steps requires treatment of the pyrogenic compound with a water steam at elevated temperature (e.g. 600 °C).

The present invention further concerns a **burner** (B) **suitable for use in the process** according to the invention characterized in that

the burner (B) comprises a tube system (S), said tube system (S) comprising at least 4 concentric tubes (1, 2, 3, 4) wherein

the second tube (2) is arranged around the central tube (1), the third tube (3) is arranged around the second tube (2), and the fourth tube (4) is arranged around the third tube (3). Typically, the burner (B) is connected to a supply of at least one precursor compound and is configured to feed the precursor compound through at least two non-adjacent tubes that are separated from each other by at least one other tube and the burner is connected to supply of oxygen or a mixture comprising oxygen and water to be fed through at least one tube not being configured to feed the at least one precursor compound.

In a preferred embodiment the at least 4 tubes (1, 2, 3, 4) are inclined from the opening of each of the tubes to the interior of the burner, preferably by an angle ($\alpha$) from the central axis (A) of the central tube (see Figure 4).

The properties described hereinbefore when describing the process according to the invention apply *mutatis mutandis* to the burner according to the invention. They are not repeated again to improve the conciseness of the present specification.

Insofar the tubes in the process are described to be used to feed a specific compound, the tubes of the burner are configured to feed the compound.

A **process for making the burner** according to the invention comprises the method steps

a) providing at least one meltable powder;
b) melting the at least one meltable powder in pre-defined regions employing a suitable laser; such that the burner according to the invention is obtained.

Typically, the aforementioned method steps a) and b) are repeated multiple times and the burner is produced layer-by-layer in an additive manufacturing process. The meltable powder can be provided in form of a powder bed. Then, the process is occasionally referred to as powder bed fusion in the art.

The meltable powder is not restricted as long as it can be melted by means of the laser in method step b). Preferable meltable powders are selected from the group consisting of metals and metal alloys. More preferably, the at least one meltable powder selected from the group consisting of iron, iron based alloys such as steel, aluminum and aluminum based alloys.

Any laser suitable to melt the meltable powder can be used. The person skilled in the art can select a suitable laser based on routine experiments or his general knowledge. Typically, useful lasers are Nd: YAG, diode or $CO_2$ lasers. The melting is usually carried out under inert atmosphere, e.g. by, supplying argon or helium, to prevent oxidation of the meltable powder.

The person skilled in the art can select suitable parameters for the making of the burner according to the invention based on routine experiments.

The present invention is also directed at a **production facility** suitable for carrying out the process according to the invention characterized in that the production facility comprises at least one burner according to the invention and at least one feeding device for the at least one precursor compound.

Suitable feeding devices are not particularly limited. Exemplarily, a feeding device can be compressed-gas container.

The production facility optionally comprises a windbox partially enclosing the burner. The windbox serves to limit the mixing the compounds fed through the burner and the surrounding environment to improve the efficiency of the mixing of the compound in the flame.

The production facility preferably comprises a flame holder. Said flame holder is preferably located outside of the burner. It is preferably located that if the flame holder holds the flame, it is close enough to be supported by the compounds emitting from the burner.

The production facility further preferably comprises a mechanical means to remove the formed pyrogenic compound from the burner. This mechanical means can be a doctor blade or a brush.

The production facility preferably comprises a combustion chamber. In the combustion chamber is the major reaction taking place. Combustion of burning gas and high temperature hydrolysis.

Further, the production facility comprises a cooled flame tube. The cooled flame tube aims at particle generation and cooling of the process gases (incl. particles).

The invention will now be illustrated by the following non-limiting examples.

**Examples**

**The measurement of BET specific surface area** is conducted as described in DIN ISO 9277 - 2014-01.

The first burner was made by a powder bed fusion process using a conventional laser. The burner had the dimensions provided in table 1a. This burner was used throughout examples 4-9 described hereinafter. The burner depicted in figure 6 was used for the comparative examples (1-3).

Table 1a: Burner dimensions + feed for a typical experiment (example 1)

| No. of tube from center | Compound | Feed velocity [m/s] | r [mm] | a [mm$^2$] |
|---|---|---|---|---|
| Central tube (1) | $SiCl_4/H_2$ | 19.9 | 0.7 | 0.78 |
| Second tube (2) | air/$H_2O$ | 25.3 | 2.15 | 10.05 |
| Third tube (3) | $SiCl_4/H_2$ | 22.1 | 4.1 | 22.62 |
| Fourth tube (4) | air/$H_2O$ | 25.5 | 6.1 | 35.19 |
| Fifth tube (5) | $SiCl_4/H_2$ | 18.3 | 8.1 | 47.75 |
| Sixth tube (6) | air/$H_2O$ | 23.0 | 10.1 | 60.32 |
| Jacket (J) | $H_2$ | | 12.3 | 88.21 |
| r = radius; a = surface area of the tube | | | | |

A second burner with four tubes and a jacket was made similarly to the first burner by a powder bed fusion process using a conventional laser. The burner had the dimensions provided in table 1b. This burner was used in examples 10 and 11.

Table 1b: Burner dimensions + feed for a typical experiment with 4 pipe + Jacket burner

| No. of tube from center | r [mm] | a [mm$^2$] | comparative example (10) | | Inventive example (11) | |
|---|---|---|---|---|---|---|
| | | | compound | Feed velocity [m/s] | compound | Feed velocity [m/s] |
| Central tube (1) | 2.3 | 7.1 | $SiCl_4/H_2$ | 23.4 | $SiCl_4/H_2/N_2$ | 23.6 |
| Second tube (2) | 3.7 | 9.8 | air | 25.5 | air | 25.5 |
| Third tube (3) | 5.1 | 15.1 | $H_2/N_2$ | 23,9 | $SiCl_4/H_2$ | 24.0 |
| Fourth tube (4) | 6.6 | 24 | air | 23.2 | air | 23.2 |
| Jacket (J) | 8.7 | 59.2 | $H_2$ | 2.4 | $H_2$ | 2.4 |

**Example 1 (comparative)**

The mixture of 8.0 kg/h $SiCl_4$ in vapor form, 3.16 m$^3$/h hydrogen and 7.6 m$^3$/h air was premixed in a burner as shown in figure 6. The reaction mixture was ignited and burned from the opening of the burner into the combustion chamber and further into the cooled flame tube. Secondary air was introduced in the burner chamber comprising the burner but outside the burner itself. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 2 (comparative)**

The mixture of 8.0 kg/h $SiCl_4$ in vapor form, 3.16 $m^3$/h hydrogen and 10.6 $m^3$/h air was premixed in a burner as shown in figure 6. The reaction mixture was ignited and burned from the opening of the burner into the combustion chamber and further into the cooled flame tube. Secondary air was introduced in the burner chamber comprising the burner but outside the burner itself. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 3 (comparative)**

The mixture of 8.0 kg/h $SiCl_4$ in vapor form, 3.16 $m^3$/h hydrogen and 13.6 $m^3$/h air was premixed in a burner as shown in figure 6. The reaction mixture was ignited and burned from the opening of the burner into the combustion chamber and further into the cooled flame tube. Secondary air was introduced in the burner chamber comprising the burner but outside the burner itself. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 4 (inventive): lambda increase**

The mixture of 8.0 kg/h $SiCl_4$ in vapor form and 3.16 $m^3$/h hydrogen was separately introduced into a burner as shown in figure 2 (but with 6 concentric tubes). Additionally 7.6 $m^3$/h air was separately introduced into the burner. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 5 (inventive): lambda increase**

The mixture of 8.0 kg/h $SiCl_4$ in vapor form and 3.16 $m^3$/h hydrogen was separately introduced into a burner as shown in figure 2 (but with 6 concentric tubes). Additionally 10.6 $m^3$/h air was separately introduced into the burner. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 6 (inventive): lambda increase**

The mixture of 8.0 kg/h $SiCl_4$ in vapor form and 3.16 $m^3$/h hydrogen was separately introduced into a burner as shown in figure 2 (but with 6 concentric tubes). Additionally 13.6 $m^3$/h air was separately introduced into the burner. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 7 (inventive example): omega increase**

The mixture of 8.0 kg/h $SiCl_4$ in vapor form and 3.16 $m^3$/h hydrogen was separately introduced into a burner as shown in figure 2 (but with 6 concentric tubes). Additionally a mixture of 7.6 $m^3$/h air and 1 kg/h of water vapor was separately introduced into the burner. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 8 (inventive example): omega increase**

The mixture of 8.0 kg/h $SiCl_4$ in vapor form and 3.16 $m^3$/h hydrogen was separately introduced into a burner as shown in figure 2 (but with 6 concentric tubes). Additionally a mixture of 7.6 m$^3$/h air and 1.5 kg/h of water vapor was separately introduced into the burner. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 9 (inventive example): omega increase**

The mixture of 8.0 kg/h SiCl$_4$ in vapor form and 3.16 m$^3$/h hydrogen was separately introduced into a burner as shown in figure 2 (but with 6 concentric tubes). Additionally a mixture of 7.6 m$^3$/h air and 2.56 kg/h of water vapor was separately introduced into the burner. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2a.

**Example 10 (comparative): 4 pipe burner bad mixing**

The mixture of 3.0 kg/h SiCl$_4$ in vapor form and 0.2 m$^3$/h hydrogen was separately introduced into the central tube of a burner as shown in figure 2. Additionally, 2.9 m$^3$/h air was separately introduced into the burner (tube 2 and 4). 1 m$^3$/h hydrogen and 0.3 m$^3$/h nitrogen was separately introduced into the third tube to ensure similar outlet velocity. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2b.

**Example 11 (inventive): 4 pipe burner good mixing**

The mixture of 1 kg/h SiCl$_4$ in vapor form and 0.16 m$^3$/h hydrogen and 0.3 m$^3$/h nitrogen was separately introduced into the central tube of a burner as shown in figure 2. Additionally 2.9 m$^3$/h air was separately introduced into the burner (tube 2 and 4). The mixture 2 kg/h SiCl$_4$ in vapor form and 1.04 m$^3$/h hydrogen was separately introduced into the third tube. Secondary air was introduced in the burner chamber comprising the burner but outside the burner itself. The introduced gases were mixed at the outlet of the burner and ignited in the burning chamber. The particle gas mixture was further cooled down and the fumed silica powder formed was separated from the gases and deacidified using water steam at 600 °C in a conventional deacidification unit. The BET specific surface area of the fumed silica powder is given in table 2b.

Table 2a: Comparison of examples

| | | Comparative examples | | | Inventive examples | | | | | |
|---|---|---|---|---|---|---|---|---|---|---|
| Example # | | 1 | 2 | 3 | 4 | 5 | 6 | 7 | 8 | 9 |
| SiCl$_4$ | kg/h | 8 | 8 | 8 | 8 | 8 | 8 | 8 | 8 | 8 |
| Hydrogen from tube system | Nm$^3$/h* | 3.16 | 3.16 | 3.16 | 3.16 | 3.16 | 3.16 | 3.16 | 3.16 | 3.16 |
| Hydrogen from jacket | Nm$^3$/h* | 0.5 | 0.5 | 0.5 | 0.5 | 0.5 | 0.5 | 0.5 | 0.5 | 0.5 |
| Air from tube system | Nm$^3$/h* | 7.6 | 10.6 | 13.6 | 7.6 | 10.6 | 13.6 | 7.6 | 7.6 | 7.6 |
| Water vapor | kg/h | 0 | 0 | 0 | 0 | 0 | 0 | 1 | 1.5 | 2.56 |
| Secondary air | Nm$^3$/h* | 19 | 19 | 19 | 19 | 19 | 19 | 19 | 19 | 19 |
| Productivity | g/Nm$^{3*}$ | 250 | 198 | 163 | 250 | 198 | 163 | 225 | 215 | 195 |
| gamma# | | 1.5 | 1.5 | 1.5 | 1.5 | 1.5 | 1.5 | 1.5 | 1.5 | 1.5 |
| lambda# | | 1.0 | 1.4 | 1.8 | 1.0 | 1.4 | 1.8 | 1.0 | 1.0 | 1.0 |
| omega | | 0 | 0 | 0 | 0 | 0 | 0 | 1.18 | 1.77 | 3.02 |

(continued)

| Example # | | Comparative examples | | | Inventive examples | | | | | |
|---|---|---|---|---|---|---|---|---|---|---|
| | | 1 | 2 | 3 | 4 | 5 | 6 | 7 | 8 | 9 |
| BET | m$^2$/g | 150 | 251 | 485 | 221 | 300 | 448 | 377 | 453 | 483 |
| Tamped density | g/l | 26 | 26 | 25 | 24 | 25 | 25 | 26 | 26 | 26 |

Table 2b: Comparison of examples

| | | Comparative example | Inventive example |
|---|---|---|---|
| Example # | | 10 | 11 |
| SiCl$_4$ | kg/h | 3 | 3 |
| Hydrogen from tube system | Nm$^3$/h* | 1.2 | 1.2 |
| Hydrogen from jacket | Nm$^3$/h* | 0.5 | 0.5 |
| Air from tube system | Nm$^3$/h* | 2.9 | 2.9 |
| Water vapor | kg/h | 0 | 0 |
| Secondary air | Nm$^3$/h* | 17 | 17 |
| Productivity | g/Nm$^3$* | 208 | 208 |
| gamma$^\#$ | | 1.5 | 1.5 |
| lambda$^\#$ | | 1.0 | 1.0 |
| omega | | 0 | 0 |
| BET | m$^2$/g | 201 | 223 |
| Tamped density | g/l | 25 | 24 |
| * Abbreviation "Nm$^3$" refers in the context of the present invention to volume in cubic meters (m$^3$) at standard conditions (temperature 0 °C, pressure 1 atmosphere). | | | |

Inventive examples 4, 5 and 6 carried out with exactly the same total feed amounts as comparative examples 1, 2 and 3, respectively, allow for significantly increasing the BET surface areas of the produced silicas while keeping the constant plant productivities.

Inventive examples 7-9 compared with example 1 allow for manufacturing fumed silicas with much higher BET specific surface areas, while only slightly reducing plant productivity. In comparative examples 2 and 3, BET specific surface area can be increased by using more air (higher lambda). However, in this case, productivity of the plant (g SiO$_2$ / m$^3$ gas mixture) is lower than in the inventive examples. Thus, the process of the invention allows for increasing productivity of the plant and/or increasing the BET specific surface area of the produced pyrogenic compound. As known from prior art and confirmed by experiments, using water in a burner with premixed flame results in deposits and blockings throughout the experiment. This was not observed in case of the inventive examples 7-9.

Inventive example 11 allows a manufacturing of a fumed silica with a higher surface area compared to the one as obtained in comparative example 10. In comparative example 10 only the central tube is fed with SiCl$_4$/H$_2$. This results in worse mixing leading to lower BET surface area and inhomogeneous product quality.

**Claims**

1. A process for producing at least one pyrogenic compound selected from the group consisting of metal oxide, metalloid oxide and mixtures of the aforementioned by burning at least one precursor compound selected from the group consisting of metal oxide precursor and metalloid oxide precursor, the process employing at least one burner (B) **characterized in that**

the at least one burner (B) comprises a tube system (S), said tube system comprising at least 4 concentric tubes (1, 2, 3, 4) wherein

the second tube (2) is arranged around the central tube (1), the third tube (3) is arranged around the second tube (2), and the fourth tube (4) is arranged around the third tube (3), and wherein

the at least one precursor compound is fed through at least two tubes that are separated from each other by at least one other tube and

wherein an oxygen containing gas stream is fed through at least one tube not being used to feed the at least one precursor compound.

2. The process according to claim 1 **characterized in that** water is fed through at least one tube of the tube system (S) and that the oxygen containing gas stream is preferably fed in one tube together with the water.

3. The process according any one of claims 1 or 2 **characterized in that** the burner (B) comprises at least one jacket (J) arranged around the tube system (S) and that no precursor compound is preferably fed through the outermost tube of the burner or the jacket (J).

4. The process according to any one of the preceding claims **characterized in that** the at least 4 tubes end in a plane, said plane being preferably arranged in an angle of $90° \pm 10°$ in relation to the central axis (A) of the tube system (S).

5. The process according to any one of the preceding claims **characterized in that** the surface area of the opening of any tube being closer to the central axis of the tube system (S) is smaller or the same as the surface area of the opening of any tube being located further away from said axis.

6. The process according to any one of the preceding claims **characterized in that** the cross-section of the at least 4 tubes is round-shaped, preferably circular.

7. The process according to any one of the preceding claims **characterized in that** the at least one tube used to feed the oxygen-containing gas stream is located between two tubes being used to feed the at least one precursor compound.

8. The process according to any one of the preceding claims 1-7 **characterized in that** a fuel gas is fed through at least one tube, wherein said tube is not used to feed oxygen-containing gas stream and wherein the fuel gas is preferably selected from the group consisting of hydrogen, methane, ethane, propane, acetylene and mixtures of the aforementioned.

9. The process according to any one of the preceding claims **characterized in that** the cross-section area at the opening of the burner perpendicular to the central axis (A) of the burner (B), of each concentric tube, constitutes from 1% to 30% of the total cross-section area of all concentric tubes of the burner.

10. The process according to any one of the preceding claims **characterized in that** water is fed through at least one tube not being used to feed the at least one precursor compound and that the molar ratio of water to at least one precursor compound used in the burner is at least 0.1, preferably at least 0.3, more preferably it ranges from 0.3 to 5.0.

11. The process according to any one of the preceding claims **characterized in that** the at least one precursor compound and optionally, the fuel gas are fed through the central tube (1);

the oxygen and optionally, water are fed through the second tube (2);
the precursor compound and optionally, the fuel gas are fed through the third tube (3);
the oxygen and optionally, water are fed through the fourth tube (4).

12. A burner (B) suitable for use in the process according to any one of the preceding claims **characterized in that**

the burner (B) comprises a tube system (S), said tube system (S) comprising at least 4 concentric tubes (1, 2, 3, 4) wherein

the second tube (2) is arranged around the central tube (1), the third tube (3) is arranged around the second tube (2), and the fourth tube (4) is arranged around the third tube (3).

**13.** The burner (B) according to claim 12 **characterized in that** the at least 4 tubes (1, 2, 3, 4) are inclined from the opening of each of the tubes to the interior of the burner, preferably by an angle ($\alpha$) from the central axis (A) of the central tube.

**14.** A production facility suitable for carrying out the process according to any one of claims 1 to 11 **characterized in that** the production facility comprises at least one burner according to any one of claims 12 to 13 and at least one feeding device for the at least one precursor compound.

**Figure 1**

B

4
3
2
1  S
2
3
4

**Figure 2**

Figure 3

**Figure 4**

**Figure 5**

**Figure 6**

← Outer tube

← Inner tube

Europäisches
Patentamt

European
Patent Office

Office européen
des brevets

# EUROPEAN SEARCH REPORT

Application Number

EP 24 17 0157

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 213 263 A2 (SHINETSU CHEMICAL CO [JP]) 12 June 2002 (2002-06-12) * paragraphs [0009], [0020] - [0036]; examples 1-5 * * figure 1 * * the whole document * | 1-12,14 | INV. C01B33/18 C01B13/20 C01F7/302 C01G23/07 C03B19/14 F23G7/06 |
| X | US 4 801 437 A (KONAGAYA YOSHIAKI [JP] ET AL) 31 January 1989 (1989-01-31) | 12-14 | B22F5/10 B22F10/28 |
| A | * column 8, line 9 - column 9, line 10; claim 1; figures 2,5,6 * * the whole document * | 1-11 | B33Y80/00 F23D14/22 F23D99/00 F23L7/00 |
| X | JP H07 187683 A (NIKON CORP) 25 July 1995 (1995-07-25) | 12-14 | |
| A | * paragraphs [0010] - [0015]; claims 1-7; figures 1-3 * * the whole document * | 1-11 | |

TECHNICAL FIELDS
SEARCHED    (IPC)

C01B
C03B
C01G
C01F
F23G

The present search report has been drawn up for all claims

| Place of search | Date of completion of the search | Examiner |
|---|---|---|
| The Hague | 27 August 2024 | Follens, Lana |

EPO FORM 1503 03.82 (P04C01)

## ANNEX TO THE EUROPEAN SEARCH REPORT
## ON EUROPEAN PATENT APPLICATION NO.

EP 24 17 0157

This annex lists the patent family members relating to the patent documents cited in the above-mentioned European search report.
The members are as contained in the European Patent Office EDP file on
The European Patent Office is in no way liable for these particulars which are merely given for the purpose of information.

27-08-2024

| Patent document cited in search report | | Publication date | Patent family member(s) | | Publication date |
|---|---|---|---|---|---|
| EP 1213263 | A2 | 12-06-2002 | DE | 60124659 T2 | 13-09-2007 |
| | | | EP | 1213263 A2 | 12-06-2002 |
| | | | JP | 3750728 B2 | 01-03-2006 |
| | | | JP | 2002173318 A | 21-06-2002 |
| | | | US | 2002102199 A1 | 01-08-2002 |
| US 4801437 | A | 31-01-1989 | NONE | | |
| JP H07187683 | A | 25-07-1995 | JP | 3520541 B2 | 19-04-2004 |
| | | | JP | H07187683 A | 25-07-1995 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2049641 A
- US 2004253164 A
- US 20090253851 A
- US 2005129603 A
- US 2004216494 A
- US 6063354 A